Europäisches Patentamt

European Patent Office

Office européen des brevets

(11) Numéro de publication: **0 376 857**

**A1**

## (12) DEMANDE DE BREVET EUROPEEN

(21) Numéro de dépôt: **89420448.6**

(22) Date de dépôt: **17.11.89**

(51) Int. Cl.5: **B62B 5/00, B07C 7/02**

(30) Priorité: **29.12.88 FR 8817583**

(43) Date de publication de la demande:
**04.07.90 Bulletin 90/27**

(84) Etats contractants désignés:
**BE CH DE ES FR GB IT LI NL SE**

(71) Demandeur: **JET SERVICES**
**35 rue de la Villette**
**F-69003 Lyon(FR)**

(72) Inventeur: **Le Gouill, Pascal**
**43 Avenue du 8 mai 1945**
**F-69500 Bron(FR)**

(74) Mandataire: **Laurent, Michel et al**
**Cabinet LAURENT 20, rue Louis Chirpaz B.P. 32**
**F-69131 Ecully Cédex(FR)**

(54) **Ensemble pour le transport de colis en vrac et en sécurité.**

(57) Ensemble pour le transport de colis en vrac et en sécurité, comprenant un conteneur (1) destiné à recevoir lesdits colis en vrac, constitué par un fond (2) et des faces latérales (3, 4, 5), recouvertes par une face (10) de protection, scellée au fond du conteneur, **caractérisé** :
- en ce que le conteneur (1) est ouvert sur au moins un de ses faces latérales (6) ;
- et en ce que la face (20) de la housse (10) destinée à venir en regard de la face ouverte (26) du conteneur (1) a la forme d'un rabat libre (20) qui recouvre intégralement ladite face ouverte (6), est articulé sur le haut (21) de la housse (10) et du conteneur (1), et est scellé (24) au fond du conteneur.

FIG.4

EP 0 376 857 A1

## ENSEMBLE POUR LE TRANSPORT DE COLIS EN VRAC ET EN SECURITE

L'invention concerne un ensemble pour le transport de colis en vrac.

Pour le transport de colis en vrac, il est bien connu de mettre ces colis dans un conteneur grillagé roulant dont le couvercle est fermé par un cadenas. Pour améliorer la protection des colis contre les intempéries pendant le stockage et le transport et pour assurer de meilleures conditions de sécurité, on a suggéré de recouvrir le conteneur par une housse dont les bords antérieurs sont scellés au fond du conteneur. Bien qu'utilisée, cette solution présente un inconvénient notable de nécessiter des manipulations pour assurer la mise en place et le retrait de la housse à chaque transport. En outre ces manipulations provoquent des salissures de la housse qui sont toujours préjudiciables.

L'invention pallie ces inconvénients. Elle vise un ensemble conteneur et housse du type en question qui soit léger et facile a manipuler même par une seule personne assurant le stockage et le transport des colis dans de bonnes conditions de sécurité (inviolabilité) et à l'abri des intempéries et des regards.

Cet ensemble pour le transport de colis en vrac et en sécurité comprenant un conteneur, destiné à recevoir lesdits colis, constitué par un fond et des faces latérales, recouvertes par une housse de protection scellée au fond du conteneur, se caractérise :

- d'une part en ce que le conteneur est ouvert sur au moins une de ses faces latérales ;
- et d'autre part en ce que la face de la housse, destinée à venir en regard de la face ouverte du conteneur, a la forme d'un rabat libre qui recouvre intégralement ladite face ouverte, est articulé sur le haut de la housse et du conteneur, et est scellé au fond du conteneur.

En d'autres termes l'invention consiste à faire appel à un conteneur ouvert sur au moins une de ses faces latérales verticales, pour fixer sur ce conteneur une housse de protection dont le côté est destiné à venir recouvrir la face ouverte du conteneur, forme un rabat articulé sur le haut, puis à sceller ce rabat au fond du conteneur et à solidariser ses faces latérales au conteneur. De la sorte, grâce à la face ouverte, on peut commodément charger et décharger des colis dans le conteneur, éventuellement en assurant leur maintien grâce à des sangles élastiques de retenue, puis on ferme le rabat entre cette face ouverte, et on scelle son embase sur le fond du conteneur pour assurer ainsi un stockage et un transport en sécurité.

Avantageusement en pratique :
- le rabat comporte sur chacun des ses deux côtés latéraux un prolongement en forme de triangle, isocèle notamment, repliable sur le corps de la housse et dont les sommets sont scellés à ladite housse ;

- chaque sommet du triangle présente une boucle, et la face arrière de la housse opposée au rabat présente une sangle passant à l'intérieur de l'ensemble, sortant de la housse par des orifices ménagés à cet effet, la hauteur des sommets des triangles, de sorte que ladite sangle puisse être engagée dans chaque boucle des triangles, puis être repliée sur la face arrière de la housse pour recevoir un scellé de dissuasion ;

- le conteneur comprend un fond rectangulaire sur lequel sont fixés trois côtés contigus rigides, verticaux en forme de grille, le côté avant ouvert étant susceptible d'être obturé de part en part par des sangles de retenue, la housse étant fixée sur les côtés des grilles de la face ouverte et scellée sur le fond du conteneur par des scellés permanents, alors que le bas du rabat est fixé au fond du conteneur par un scellé de dissuasion à usage unique.

La manière dont l'invention peut être réalisée et les avantages qui en découlent ressortiront mieux de l'exemple de réalisation qui suit à l'appui des figures annexées :

- la figure 1 est une vue en perspective sommaire d'un conteneur conforme à l'invention ;
- la figure 2 est une vue en perspective sommaire d'une housse préférée selon l'invention ;
- la figure 3 est une vue en perspective sommaire d'un ensemble conteneur et housse ouverte, repliée sur le sommet ;
- la figure 4 est une vue en perspective trois-quart avant de cet ensemble, alors que la figure 5 est une représentation de ce même ensemble vu de côté ;
- enfin la figure 6 montre en détail la sangle de scellé arrière.

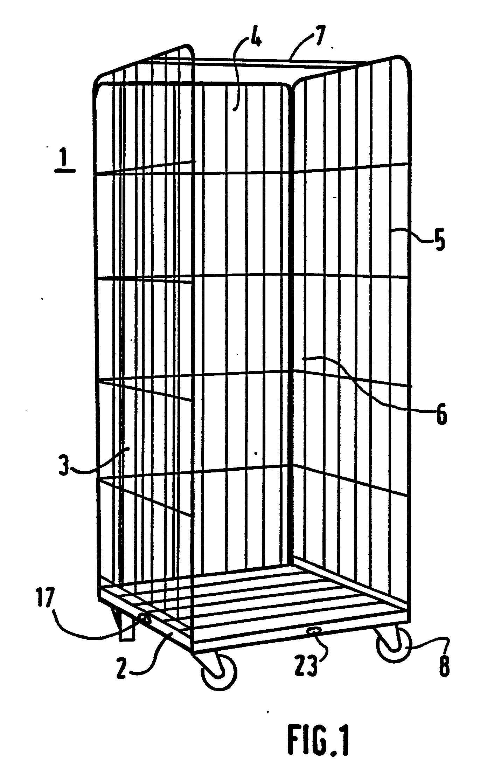

Le conteneur caractéristique de l'invention montré à la figure 1, désigné par la référence générale (1) comprend essentiellement un fond (2) sur lequel vient s'appuyer orthogonalement trois côtés verticaux contigus, respectivement (3,4, 5) ménageant entre eux sur l'avant un côté (6) ouvert. De manière connue ce con teneur est constitué par des grilles métalliques, rigides d'usage courant pour cette application. La face supérieure est maintenue par un tirant de renfort (7). Le fond est rendu mobile grâce à des roulettes (8). La face ouverte (6) est barrée de part en part et de manière connue par des sangles (9) élastiques de retenue destinées à maintenir les colis disposés en vrac dans le conteneur (1).

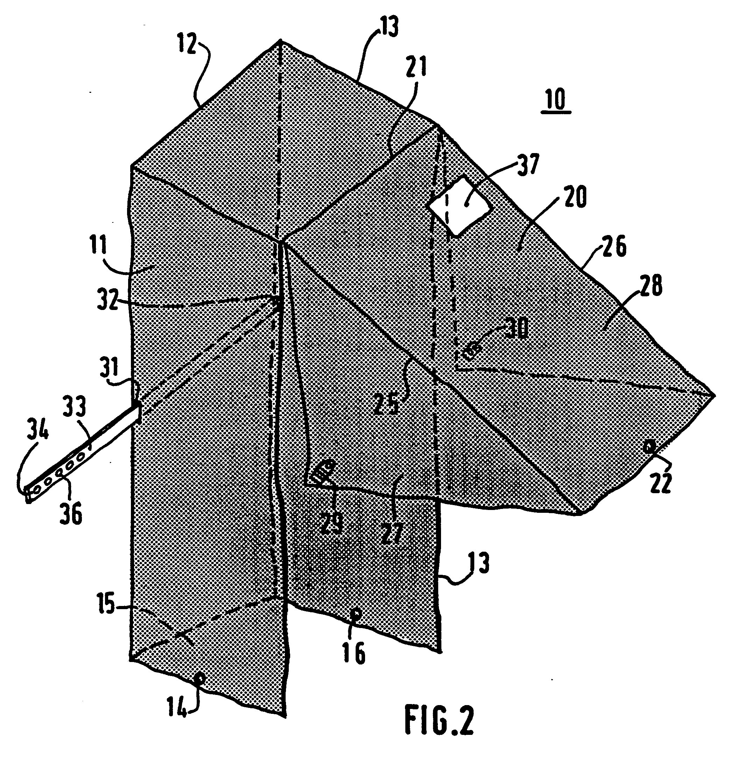

La housse caractéristique désignée par la référence générale (10) montrée à la figure 2 a des dimensions générales intérieures correspondant aux dimensions générales extérieures du conteneur (1). De manière connue cette housse est confectionnée dans un tissu enduit soudé et/ou cousu d'usage courant pour cette application, par exemple dans un tissu polyester enduit double face de polychlorure de vinyle pesant environ 650 grammes au mètre carré. Les faces latérales verticales (11, 12, 13) viennent s'adosser sur les faces latérales (3, 4, 5) du conteneur (1). Ces faces présentent à leur base les oeillets (14, 15, 16) destinés à venir se placer en regard d'orifices (17), prévus à cet effet, sur les faces latérales du fond (2) destinées à coopérer avec les oeillets (14, 15, 16) pour recevoir un scellé permanent de sécurité (18) tel une sangle plombée.

Selon une caractéristique originale de l'invention, la face avant (20) de la housse (10) destinée à venir recouvrir la face ouverte (26) du conteneur forme un rabat articulé sur le haut (21) de la housse et du conteneur. Le bas de ce rabat présente un oeillet (22) destiné à coopérer avec un orifice (23) prévu à cet effet sur la face avant du fond (2) pour recevoir un scellé de dissuasion (24) à usage unique, par exemple en matière plastique moulée. Avantageusement le rabat pré sente sur chacun de ses côtés latéraux (25, 26) un prolongement (27, 28) en forme de triangle isocèle en tissu enduit, repliable sur les faces verticales (11, 13) de la housse (10). La hauteur de ces triangles (27, 28) est légèrement inférieure à la largeur des côtés (11, 13) et le sommet de ces triangles reçoit une patte soudée cousue, dont l'extrémité libre comporte un passant (29, 30) en forme de boucle. La face arrière (12) de la housse présente à hauteur des pointes (29, 30) des triangles (27, 28) repliés et de chaque côté, une ouverture (31, 32) dans laquelle coulisse librement une sangle (33) dont les bouts des passants (34) et (35) présentent des bouts de positionnement (36). Enfin le haut du rabat (20) présente un moyen (37) tel qu'une enveloppe destinée à recevoir les caractéristiques et le bon de transport.

L'ensemble fonctionne de la manière suivante.

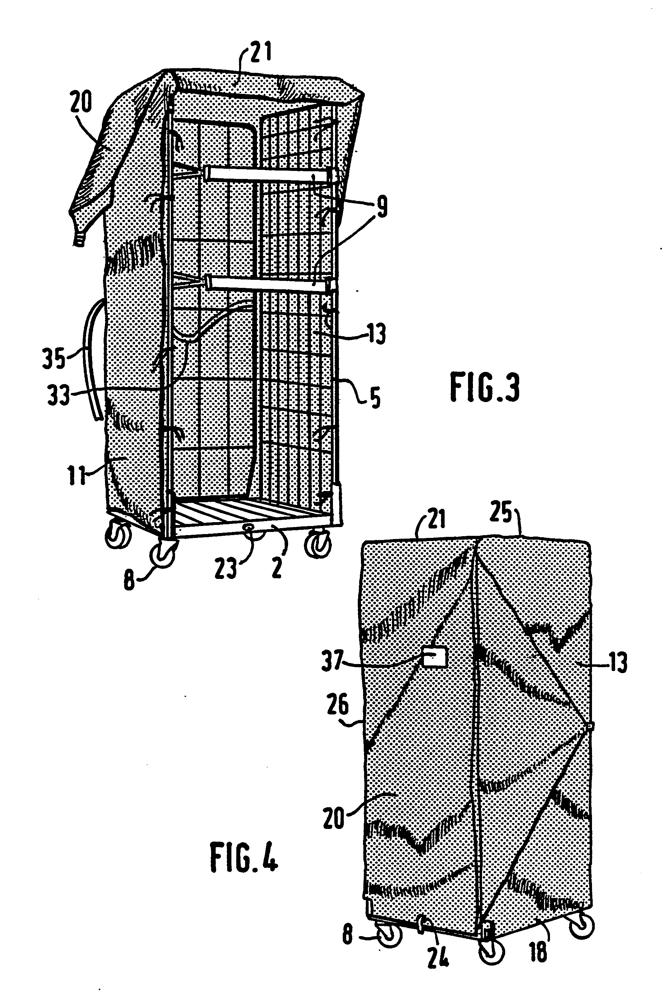

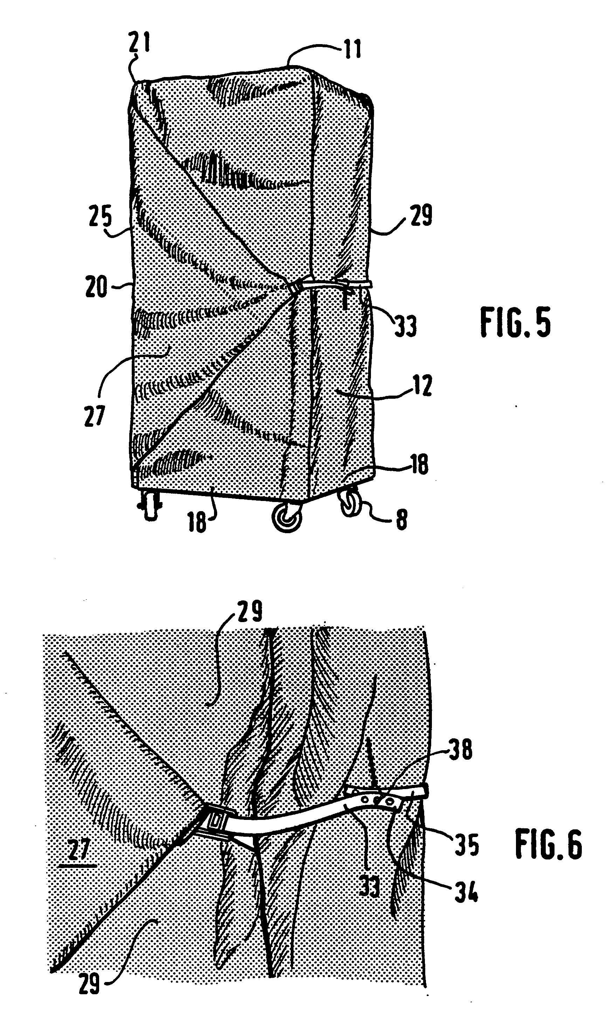

On place la housse (10) sur le conteneur (1) (fig. 3) en fixant les côtés libres des faces (11, 13) sur les côtés correspondants (3 a 5) du conteneur grâce a des cordelettes, des boutons pression, des organes d'accrochage type velours crochet (connus sous la marque déposée VELCRO) ou tout autre moyen équivalent (fig. 3). On charge les colis en vrac dans le conteneur (1) puis on barre de part en part la face ouverte (6) par des sangles élastiques de retenue (9) d'usage courant pour cette application, et enfin, on replie le rabat (20) sur la face ouverte (6), et on ramène les portions triangulaires (27, 28) sur les faces (11, 13). On engage alors la sangle (33), plus exactement les extrémités (34, 35) dans les passants (29, 30) (figures 5 et 6). On replie ensuite sur la face arrière (12) les deux extrémités libres (34, 35) et on engage à travers les trous (34) un scellé de dissuasion (38) à usage unique. On ferme enfin le bas du rabat (20) en introduisant également un scellé de dissuasion à usage unique dans l'oeillet (22) et dans l'orifice prévu à cet effet (23) dans le fond (2). On introduit dans la poche (37) les caractéristiques et le bon de transport.

L'ensemble est alors prêt pour le transport. Il peut être commodément manipulé grâce aux roulettes (8), stocké et transporté dans des conditions satisfaisantes de sécurité, à l'abri des regards et protégé des intempéries.

Une fois arrivé à destination, il suffit d'enlever les scellés de dissuasion (24) et (38) et de décharger le conteneur qui se trouve alors prêt à un nouvel emploi.

Toutes ces opérations peuvent être effectuées par une seule personne sans effort et sans manipulation excessive.

De la sorte ce dispositif peut être utilisé avec succès pour le stockage et le transport de fret et de colis en vrac.

## Revendications

1/ Ensemble pour le transport de colis en vrac et en sécurité, comprenant un conteneur (1) destiné à recevoir lesdits colis en vrac, constitué par un fond (2) et des faces latérales (3, 4, 5), recouvertes par une face (10) de protection, scellée au fond du conteneur, **caractérisé** :
- en ce que le conteneur (1) est ouvert sur au moins un de ses faces latérales (6) ;
- et en ce que la face (20) de la housse (10) destinée à venir en regard de la face ouverte (26) du conteneur (1) a la forme d'un rabat libre (20) qui recouvre intégralement ladite face ouverte (6), est articulé sur le haut (21) de la housse (10) et du conteneur (1), et est scellé (24) au fond du conteneur.

2/ Ensemble selon la revendication 1, caractérisé en ce que le rabat (20) de la housse (10) comporte sur chacun de ses deux côtés latéraux (25, 26) un prolongement en forme de triangle (27, 28) repliable sur les côtés (11, 12) de la housse (10) et dont les sommets (29, 30) sont scellés sur ladite housse (10).

3/ Ensemble selon la revendication 2, caractérisé en ce que les prolongements (27, 28) ont la forme d'un triangle isocèle.

4/ Ensemble selon l'une des revendications 2 et 3, caractérisé en ce que la face arrière (12) de la housse (10) opposée au rabat (20) présente une sangle (33) passant à l'intérieur de l'ensemble, sortant de celui-ci par des orifices (31, 32) ménagés à cet effet dans la housse (10), à hauteur des sommets (29, 30) des triangles (27, 28), de sorte que les extrémités (34, 35) de ladite sangle (33) puissent être engagées dans chaque boucle (29, 30) des triangles et repliées sur la face arrière (12) de la housse (10) pour recevoir un scellé (38) de dissuasion.

5/ Ensemble selon l'une des revendications 1 à 4 caractérisé en ce que le conteneur (1) comprend un fond rectangulaire (2) sur lequel est fixé trois côtés verticaux rigides contigus (3, 4, 5) en forme de grille, et une face avant (6) ouverte, obturée de part en part par des sangles de retenue (9), la housse (10) étant fixée sur les côtés des grilles (3, 5) de la face ouverte (6) et scellées sur le fond (2) par des scellés permanents (18), alors que le bas (22) du rabat (20) est fixé au fond (23) du conteneur par un scellé (24) de dissuasion à usage unique.

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 000 101  (STAPLA)<br>* Résumé; page 2, lignes 56-76; figures * | 1 | B 62 B    5/00<br>B 07 C    7/02 |

-----

**DOMAINES TECHNIQUES RECHERCHES (Int. Cl.5)**

B 62 B
B 07 C

**Le présent rapport a été établi pour toutes les revendications**

| Lieu de la recherche | Date d'achèvement de la recherche | Examinateur |
|---|---|---|
| LA HAYE | 02-03-1990 | NEWELL P.G. |

EPO FORM 1503 03.82 (P0402)